# EUROPEAN PATENT SPECIFICATION

(11) **EP 3 552 801 B1**
(45) Date of publication and mention of the grant of the patent: **27.11.2024**
(21) Application number: 17882040.3
(22) Date of filing: 11.12.2017
(51) Int. Cl.: B29C 61/06, B65D 23/08, C09J 11/06, C09J 167/00, G09F 3/04, B29K 67/00, B29K 105/02, B29L 7/00

(54) **HEAT-SHRINKABLE POLYESTER-BASED LABEL, PACKAGE, AND METHOD FOR PRODUCING HEAT-SHRINKABLE POLYESTER-BASED LABEL**
WÄRMESCHRUMPFBARES ETIKETT AUF POLYESTERBASIS, VERPACKUNG UND VERFAHREN ZUR HERSTELLUNG EINES WÄRMESCHRUMPFBAREN ETIKETTS AUF POLYESTERBASIS
ÉTIQUETTE THERMO-RÉTRÉCISSABLE À BASE DE POLYESTER, EMBALLAGE, ET PROCÉDÉ DE PRODUCTION D'ÉTIQUETTE THERMO-RÉTRÉCISSABLE À BASE DE POLYESTER

(30) Priority: 12.12.2016 JP 2016240179; 24.03.2017 JP 2017059032
(43) Date of publication of application: 16.10.2019
(73) Proprietor: TOYOBO CO., LTD., Osaka-shi, Osaka 530-0001 (JP)
(72) Inventor: MARUYAMA, Hiroko, Tsuruga-shi Fukui 914-8550 (JP); HARUTA, Masayuki, Tsuruga-shi Fukui 914-8550 (JP)
(74) Representative: Vossius & Partner Patentanwälte Rechtsanwälte mbB
(86) International application number: PCT/JP2017/044352
(87) International publication number: WO 2018/110493

(56) References cited:
- WO-A1-2006/109662
- WO-A1-2006/109662
- WO-A1-2016/039133
- WO-A1-2016/039133

## Description

### TECHNICAL FIELD

The present invention relates to a heat-shrinkable polyester-based label formed by making a heat-shrinkable polyester-based film round into a tubular form, and bonding both end portions of the film to each other with a solvent. More specifically, the invention relates to a heat-shrinkable polyester-based label which less easily causes an excessive solvent-permeation in a solvent-bonded portion of the label even when the thickness of a film that is to form the label is small. The invention also relates to a heat-shrinkable polyester-based label having a solvent-bonded portion high in peel strength even when a polyethylene terephthalate high in crystallinity is used, as a film raw material of this label, in a large quantity.

### BACKGROUND ART

In recent years, for purposes of label-packaging, cap sealing, assembling packaging, and others that serve for both of the protection of, for example, a glass bottle or a plastic bottle, and the display of a product, the following has come to be widely used: a heat-shrinkable polyester-based label obtained from a polyester-based heat-shrinkable film which has a high heat resistance and an excellent solvent resistance and is easily burned up. With an increase of the number of PET (polyethylene terephthalate) bottle containers, and others, the use amount thereof tends to increase.

However, after heat-shrinkable labels are used, the labels turn into wastes. Thus, recently, from the viewpoint of the environment, the necessity that the waste amount should be decreased is generated, so as to start using thin heat-shrinkable labels (heat-shrinkable labels each having, as a body thereof, a film made thin). Moreover, in order to cope with various containers, there are increasing demands for heat-shrinkable films high in shrinkage ratio. Accordingly, the tendency increases that a raw material increased in amorphous quantity is used to form a heat-shrinkable film.

Moreover, in order to cope further with environmental issues, known are heat-shrinkable polyester-based films in which the proportion of PET-bottle-recycled material is increased.

Apart from the above-mentioned description, in order to form a tubular label from a heat-shrinkable film, it is necessary to put one of both the end portions in the width direction of the film onto the other end portion, and fixed the end portions to each other. As a method for the fixation, there have been conventionally used, for example, a solvent bonding method (Patent Documents 1 and 2), and a method using an adhesive (Patent Document 3). Among these methods, the solvent bonding method is widely used, which makes it possible to work the film into a tubular label at a high speed.

About a step of working surfaces of a heat-shrinkable polyester-based film into a tubular label (tubing step) in this solvent bonding method, the attainment of this step at a high speed is being advanced to improve the production efficiency of the tubes to decrease costs. In order to gain stably a solvent-bonded portion of the film that is high in peel strength (bonding strength) in the high-speed tubing step, it is advisable to increase an applied amount of 1,3-dioxolane, which is ordinarily used as a bonding solvent. However, in the case of a heat-shrinkable polyester-based film having a small thickness and made of an amorphous material in a large proportion, the increase of the applied amount of 1,3-dioxolane causes the solvent to permeate the film from the solvent-applied surface of this film to the rear surface side thereof (solvent permeation-through). Consequently, the solvent adheres also to the rear surface. When the tubular label after the solvent-bonding is wound up into a roll form, the tubular label is squashed into a flat form. When the solvent permeation-through is caused in the solvent-bonded portion, a portion of the label that has been brought into contact with the rear side of the solvent-bonded portion is unfavorably bonded to the solvent-bonded portion. Thus, the tubular label comes not to function as a tube, or undergoes blocking so that the roll becomes unable to be unwound.

Meanwhile, if the applied amount of 1,3-dioxolane is reduced to cause no solvent permeation-through, the applied amount of 1,3-dioxolane is easily varied in the high-speed tubing step. When this variation unfavorably makes the applied amount small, an inconvenience that the resultant solvent-bonded portion cannot gain a sufficient peel strength is caused. Also when tetrahydrofuran (THF) is used instead of 1,3-dioxolane to cause no solvent permeation-through, the applied amount of THF is similarly varied with ease in the high-speed tubing step. When this variation unfavorably makes the applied amount small, an inconvenience that the resultant solvent-bonded portion cannot gain a sufficient peel strength is caused.

In order to cope with environmental issues, demands are increasing for heat-shrinkable polyester-based films in which a PET-bottle-recycled material is used in a large proportion. However, the PET-bottle-recycled material is a polyethylene terephthalate material, which is high in crystallinity, to be excellent in chemical resistance, so that 1,3-dioxolane, which is a solvent described in Patent Documents 1 and 2, causes a problem the bonded portion is short in peel strength.

Thus, an invention has been made in which the bonding is attained with a mixed solvent composed of 1,3-dioxolane, and an organic solvent compatible with 1,3-dioxolane (Patent Document 4). However, in order to prevent the solvent permeation-through, necessary is the step (pre-treatment) of applying a poor solvent onto a solvent-bonded portion of a label before a solvent-bonding working and drying the solvent-bonded portion, so as to cause a problem of deteriorating the working efficiency. Moreover, as a method for omitting the pre-treatment, known is a method of attaining the bonding with a mixed solution composed of 1,3-dioxolane, and a poor solvent for polyesters. However, if the quantity of the poor solvent is small, an effect of restraining the solvent permeation-through is not gained. If the quantity is too large, the bonded portion does not gain a sufficient peel strength in the high-speed tubing step. Thus, it is necessary to adjust the blend ratio between 1,3-dioxolane and the poor solvent in accordance with the species of the film.

### PRIOR ART DOCUMENTS

### PATENT DOCUMENTS

Patent Document 1: Japanese Patent No. 3075019
Patent Document 2: Japanese Patent No. 3452021
Patent Document 3: JP-A-2014-43520
Patent Document 4: WO 2016/039133

### SUMMARY OF THE INVENTION

### PROBLEMS TO BE SOLVED BY THE INVENTION

An object of the present invention is to provide a heat-shrinkable polyester-based label and a package which each have a solvent-bonded portion where no solvent permeation-through is caused even when a film of the label is small in thickness and is large in the proportion of amorphous material. An object thereof is, in particular, to provide a heat-shrinkable polyester-based label and a package which each have a solvent-bonded portion giving a high peel strength stably even through a high-speed tubing step, or even when the film is a heat-shrinkable polyester-based film in which a PET-bottle-recycled material is used in a large proportion.

### MEANS FOR SOLVING THE PROBLEMS

The inventor have repeatedly made eager investigations about the objects to find out that in the case of using a solvent composition made of a combination of specified compound species with each other, the above-mentioned problems can be solved. Thus, the present invention has been accomplished.

Accordingly, the present invention is stated in the claims.

### EFFECT OF THE INVENTION

The present invention makes it possible to provide a heat-shrinkable polyester-based label and a package which each cause no solvent permeation-through even when a heat-shrinkable polyester-based film of this label is small in thickness and is large in the proportion of amorphous material, and which each have a solvent-bonded portion giving a high peel strength stably even through a high-speed tubing step, or even when the film is a heat-shrinkable polyester-based film in which a polyethylene terephthalate material high in crystallinity is used in a large proportion.

### MODE FOR CARRYING OUT THE INVENTION

The heat-shrinkable polyester-based label of the present invention is a tubular heat-shrinkable polyester-based label formed by putting and bonding both end portions of a heat-shrinkable polyester-based film onto each other with a solvent composition. Herein, the end portions each mean an end of the film in the width direction thereof (direction along the longitudinal direction of the film), and are each sites of the film that include a portion thereof within 20 mm of the end.

The heat-shrinkable polyester-based film in the present invention includes, in the category thereof, not only a film made only of a single polyester layer, but also a laminated film that has a laminated structure of a polyester/a resin other than any polyester/a polyester and that has outermost layers which are each a polyester-based film.

The solvent composition in the present invention contains both of 1,3-dioxolane and/or tetrahydrofuran (THF), and a polyester. This matter makes it possible to provide a polyester-based label which causes no solvent permeation-through even when the heat-shrinkable polyester-based film is small in thickness and is large in the proportion of amorphous material, and which has a solvent-bonded portion high in peel strength even when the film is a heat-shrinkable polyester-based film about which in a high-speed tubing step a polyethylene terephthalate material high in crystallinity is used in a large proportion.

1,3-Dioxolane is a good solvent for polyesters to dissolve the polyester-based film speedily. Thus, the resultant solvent-bonded portion has a high peel strength. However, a polyester-based film containing 25% or more by mass of polyethylene terephthalate, which is a main component of a PET-bottle-recycled material high in crystallinity, is not easily dissolved in 1,3-dioxolane. Accordingly, even when the solvent bonding is performed with only 1,3-dioxolane, the resultant solvent-bonded portion cannot gain a sufficient peel strength.

In contrast, when the polyester incorporated into the solvent composition in the present invention contains one or more monomer components which may turn to an amorphous component, this monomer-containing polyester is easily dissolved in an organic solvent or melted by heat. For this reason, this polyester is usable suitably for an adhesive. Thus, even when the film in the label of the present invention is a polyester-based film containing 25% or more by mass of the polyethylene terephthalate, the solvent-bonded portion of the label can gain a high peel strength by the use of the solvent composition of the present invention, which contains 1,3-dioxolane and the polyester. Moreover, when the polyester is melted by heat to be used as a hot melt agent, portions of the polyester-based film can be bonded to each other. However, when portions of the heat-shrinkable polyester-based film are bonded to each other, the polyester-based film is shrunken by heat from the hot melt agent, so as to be creased to undergo an external appearance defect easily, and further the hot melt agent is high in viscosity so that in a high-speed tubing step a predetermined amount of this agent is not stably applied to the polyester-based film with ease.

In other words, when the solvent composition contains both of 1,3-dioxolane, which is a good solvent for polyesters, and a polyester, which functions as an adhesive, the above-mentioned defect of each of these components is overcome; and even in a high-speed tubing step or even when the film of the label of the present invention is a heat-shrinkable polyester-based film in which polyethylene terephthalate material, which is a main material of a PET-bottle-recycled material, is used in a large proportion, the solvent-bonded portion of the label can express a high peel strength stably.

Meanwhile, THF is poorer than 1,3-dioxolane in polyester-dissolving performance. However, THF dissolves a polyester-based film, and a solvent-bonded portion of the film has an appropriate peel strength. Moreover, THF less easily causes solvent permeation-through than 1,3-dioxolane. Thus, THF is suitable for a thin film or a heat-shrinkable polyester-based film in which high-amorphous material is used. However, if the applied amount of THF is small, the solvent-bonded portion becomes short in peel strength.

Additionally, as described above, when one or more monomer components which may turn to an amorphous component are incorporated into the polyester or when the thus-obtained substance is further heated, the substance easily becomes soluble in THF. Thus, the substance is suitably usable as an adhesive. As described above, even when the applied amount of THF is small, the solvent-bonded portion can gain a high peel strength. Furthermore, as described above, when the polyester is melted by heat to be used as a hot melt agent, a defect is caused.

Specifically, when the solvent composition contains both of THF, which is a good solvent for polyesters, and a polyester, which functions as an adhesive, the above-mentioned defect of each of these components is overcome, so that even in a high-speed tubing step, the solvent-bonded portion can express a high peel strength stably. Moreover, even when the film used in the present invention is a heat-shrinkable polyester-based film which is highly amorphous and is made thin, solvent permeation-through is not easily caused.

It is allowable to blend, into the solvent composition in the present invention, an organic solvent compatible with 1,3-dioxolane and/or THF besides 1,3-dioxolane and/or THF and polyesters. The organic solvent compatible with 1,3-dioxolane and/or THF may be either a good solvent for polyesters or a poor solvent therefor. Examples of the good solvent for polyesters include 1,4-dioxolane, tetrahydrofuran, 1,2,2,2-tetrachloroethane, benzene, toluene, and xylene. Examples of the poor solvents for polyesters include acetone, methyl ethyl ketone, ethyl acetate, butyl acetate, and propyl acetate. When the poor solvent for polyesters is blended into the solvent composition, solvent permeation-through can also be prevented. However, an alcohol such as methanol or ethanol, which is likewise a poor solvent for polyesters, and water remarkably lower the solubility of the polyester contained in the solvent composition. Thus, it is desired to blend neither the alcohols nor water into the solvent composition. The above-mentioned organic solvents compatible with 1,3-dioxolane and/or THF may be used singly or in the form of a mixture of two or more thereof in the solvent composition. The amount of the above-mentioned organic solvents is set into a range preferably from 0 to 300 parts, more preferably from 0 to 200 parts, even more preferably from 0 to 100 parts by mass for 100 parts by mass of 1,3-dioxolane and/or THF.

The polyester used in the solvent composition in the present invention may contain, as main structural units, ethylene terephthalate units. Herein, the wording "contain, as main structural units, ethylene terephthalate units" denotes that ethylene terephthalate units are contained in a proportion of 50% or more by mole of all constituting components of the polyester. However, the proportion of the ethylene terephthalate units is preferably 70% or less, more preferably 60% or less by mole in 100% by mole of the structural units of the polyester, because chemical resistance of the polyester becomes higher, thereby its solubility in THF, 1,3-dioxolane or other organic solvents becomes lower. The proportion of the ethylene terephthalate units is preferably 5% or more, more preferably 10% or more by mole in 100% by mole of the structural units of the polyester.

Examples of a dicarboxylic acid component that is other than terephthalic acid and that is included in the polyester used in the solvent composition of the present invention include isophthalic acid, naphthalene dicarboxylic acid, orthophthalic acid, and other aromatic dicarboxylic acids; adipic acid, azelaic acid, sebacic acid, decanedicarboxylic acids, and other aliphatic dicarboxylic acids; and alicyclic dicarboxylic acids.

Example of a diol component that is other than ethylene glycol and that is included in the polyester used in the solvent composition include 1,3-propanediol, 1,4-butanediol, neopentyl glycol, hexanediol, and other aliphatic diols; 1,4-cyclohexanedimethanol, and other alicyclic diols; and bisphenol A, and other aromatic diols.

The polyester used in the solvent composition in the present invention is preferably a polyester into which one or more of the following are incorporated, so as to adjust the glass transition point (Tg) of the resultant to 70°C or lower: aromatic dicarboxylic acids such as isophthalic acid, aliphatic dicarboxylic acids such as adipic acid, cyclic diols such as 1,4-cyclohexanedimethanol, and diols each having 3 or more carbon atoms (such as 1,3-propanediol, 1,4-butanediol, neopentyl glycol or hexanediol).

In the polyester used in the solvent composition, the total proportion of one or more monomers which may turn to an amorphous component is 30% or more, preferably 40% or more, even more preferably 50% or more by mole in 100% by mole of polycarboxylic acid components or 100% by mole of polyhydric alcohol components in the entire polyester resin. If the total proportion of the monomer component(s), which may turn to an amorphous component, is less than 30% by mole, the polyester is low in solubility in an organic solvent, a typical example of which is 1,3-dioxolane, not to be usable as a solvent.

Examples of the monomer (s), which may turn to an amorphous component, include isophthalic acid, orthophthalic acid, adipic acid, sebacic acid, 1,4-cyclohexanedimethanol, neopentyl glycol, 1,3-propanediol, 1,4-butanediol, and hexanediol.

The upper limit of the content of the polyester contained in the solvent composition in the present invention is preferably 40% or less, more preferably 34% or less, even more preferably 25% or less, in particular preferably 20% or less by mass. This is because as the content of the polyester contained in the solvent composition is larger, the solvent composition is higher in viscosity so that in a high-speed tubing step it becomes more difficult to apply a constant amount of the solvent composition stably onto the polyester-based film. The lower limit of the content of the polyester contained in the solvent composition is preferably 1% or more, more preferably 2% or more, even more preferably 5% or more, in particular preferably 8% or more by mass. If the content of the polyester contained in the solvent composition is too low, the following are caused: when portions of the polyester-based film containing polyethylene terephthalate in a proportion larger than 25% by mass are bonded to each other, the end portion bonded cannot gain a sufficient peel strength; and when the applied amount of the solvent composition becomes small, the bonded portion is short in peel strength.

As required, the following may be added to the solvent composition in the present invention: various additives, a viscosity reducing agent, a heat stabilizer, a pigment for coloring, a coloring preventive, an ultraviolet absorbent, and others.

The lower limit of the viscosity of the solvent composition is not particularly limited. If the viscosity is too high, a constant amount of the solvent composition is not stably applied with ease in a high-speed tubing step. Thus, the viscosity is preferably less than 100 mPa.s or less, more preferably 90 mPa.s or less, even more preferably 80 mPa·s or less, in particular preferably 70 mPa.s or less.

In the tubing step, it is preferred to use a known center sealing machine to apply the solvent composition in an amount of about 50 to 550 mg/m² onto a heat-shrinkable polyester-based film. Moreover, in the tubing step, the width of the applied solvent composition is preferably 1 mm or more to restrain the bonded portion from being peeled. The upper limit thereof is not particularly limited. The width is preferably 10 mm or less since costs decrease as the area of the used label is smaller.

The speed of the tubing step is not particularly limited. The speed is preferably from 300 to 500 m/minute to perform this step at a high speed. After the tubing step, usually, the tubular label is made into a flat form to be wound up into a roll form, and then the label is unwound and cut into a predetermined length. In this way, a final product is produced. After the tubing step, the label may be subjected to a cutting step without winding up the label.

About the heat-shrinkable polyester-based label of the present invention, the peel strength of the solvent-bonded portion is 2 N/15mm or more, preferably 3 N/15mm or more, more preferably 4 N/15mm or more. When the peel strength is 2 N/15mm or more, troubles such as a peel can be prevented while the label is used. The upper limit of the peel strength of the solvent-bonded portion is less than 15 N/15mm. As the peel strength is higher, the label is more preferred. However, in the present invention, a peel strength of 15 N/15mm or more has not been able to be realized. The method for measuring the peel strength is according to a method that will be described in the item EXAMPLES.

The thickness of the heat-shrinkable polyester-based film constituting the heat-shrinkable polyester-based label of the present invention is preferably from 5 to 60 µm both inclusive, more preferably from 8 to 45 µm both inclusive. To make the label thin, the thickness is even more preferably 30 µm or less. A print layer may be laid onto portions of this label that are other than the bonded portion.

About the heat-shrinkable polyester-based label of the present invention, the thermal shrinkage ratio thereof is preferably 40% or more in a mainly shrunken direction thereof in a hot water of 90°C temperature in 10 seconds. When the thermal shrinkage ratio is 40% or more, the label can gain a beautiful shrunken-finish. If the thermal shrinkage ratio is less than 40%, the label is short in thermal shrinkage force. Thus, when the label is shrunken to cover, for example, a container, the label does not adhere closely to the container so that an external appearance defect is unfavorably generated. In a direction orthogonal to the mainly shrunken direction, the thermal shrinkage ratio is preferably 15% or less in hot water of 90°C temperature. If the thermal shrinkage ratio is more than 15%, a phenomenon called a "tatehike (longitudinal sink mark)" is unfavorably caused, this mark being a phenomenon that the label is shrunken in a longitudinal direction thereof. The thermal shrinkage ratio in the mainly shrunken direction means the thermal shrinkage ratio of a sample in a direction along which the sample is shrunken in a maximum quantity. The mainly shrunken direction is decided, using the length in a longitudinal or transverse direction of the sample, which is a square sample. The method for measuring the thermal shrinkage ratio (%) is according to a method that will be described in the item EXAMPLES.

The polyester used in the heat-shrinkable polyester-based label of the present invention preferably contains, as a main constituting component, ethylene terephthalate units since the polyester in this case is excellent in strength and heat resistance. The proportion of the ethylene terephthalate units is preferably 50% or more, more preferably 60% or more by mole in 100% by mole of the structural units of the polyester.

The ethylene terephthalate units may contain a unit derived from a PET-bottle-recycled material. The PET-bottle-recycled material is a material obtained by working a PET bottle for drink into flakes or pellets. When the polyester-based film is formed, this PET-bottle-recycled material is used preferably in a proportion of 90% or less by mass in 100 parts by mass of the polyester material. If the PET-bottle-recycled material is used in a proportion more than 90% by mass, polyethylene terephthalate, which constitutes a PET bottle, is high in crystallinity; thus, the resultant film may be unfavorably lowered in thermal shrinkage property. In order to promote recycle, the PET-bottle-recycled material is used desirably in a proportion of 20% or more by mass in 100% by mass of the polyester material.

Examples of a dicarboxylic acid component that is other than terephthalic acid and is included in the polyester used in the heat-shrinkable polyester-based film in the present invention include isophthalic acid, 2,6-naphthalenedicarboxylic acid, orthophthalic acid and other aromatic dicarboxylic acids; adipic acid, azelaic acid, sebacic acid, decanedicarboxylic acids and other aliphatic dicarboxylic acids; and 1,4-cyclohexanedicarboxylic acid and other alicyclic dicarboxylic acids.

When an aliphatic dicarboxylic acid (for example, adipic acid, sebacic acid, or decanedicarboxylic acid) is incorporated into the polyester, the content thereof is preferably less than 3% by mole (in 100% by mole of the dicarboxylic acid components). In a heat-shrinkable polyester-based label obtained by using a polyester containing these aliphatic dicarboxylic acids in a proportion of 3% or more by mole, the film stiffness tends to be insufficient when the label is fitted onto a container at a high speed.

It is preferred not to incorporate, into the polyester, a trivalent or a higher polycarboxylic acid (for example, trimellitic acid, pyromellitic acid, or an anhydride of the acid). A heat-shrinkable polyester-based label obtained by using a trivalent or higher polycarboxylic acid does not easily attain a required high shrinkage ratio.

Examples of a diol component that is other than ethylene glycol and is included in the polyester used in the heat-shrinkable polyester-based film in the present invention include 1,3-propanediol, 1,4-butanediol, neopentyl glycol, hexanediol, and other aliphatic diols; 1,4-cyclohexanedimethanol, and other alicyclic diols; and bisphenol A, and other aromatic diols.

The polyester used in the heat-shrinkable polyester-based film in the present invention is preferably a polyester into which one or more of the following are incorporated, so as to adjust the glass transition point (Tg) of the resultant into the range of 60 to 80°C: cyclic diols such as 1,4-cyclohexanedimethanol, and diols each having 3 to 6 carbon atoms (for example, 1,3-propanediol, 1,4-butanediol, neopentyl glycol, and hexanediol).

In the polyester used in the heat-shrinkable polyester-based film in the present invention, the total proportion of one or more monomer components which may turn to an amorphous component is 15% or more, preferably 16% or more, even more preferably 17% or more, in particular preferably 18% or more by mole in 100% by mole of the polyhydric alcohol components or 100% by mole of the polycarboxylic acids in the entire polyester resin. The upper limit of the total proportion of the monomer(s), which may turn to an amorphous component, is not particularly limited, and is preferably 30% by mole.

Examples of the monomer(s), which may turn to an amorphous component, include neopentyl glycol, 1,4-cyclohexanedimethanol, isophthalic acid, 1,4-cyclohexanedicarboxylic acid, 2,6-naphthalenedicarboxylic acid, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol. Among these examples, neopentyl glycol, 1,4-cyclohexanedimethanol or isophthalic acid is preferably used.

Herein, a detailed description will be made about the interpretation of the term "may turn to an amorphous component".

In the present invention, an "amorphous polymer" specifically denotes a polymer in the case of not having any endothermic peak based on melting in a measurement of the polymer according to a DSC (differential scanning calorimeter). In the amorphous polymer, crystallization does not substantially advance; thus, the polymer is not made into a crystal state, or has a very low crystallinity degree even when crystallized.

In the present invention, a "crystalline polymer" denotes a polymer that is not the above-defined "amorphous polymer", that is, a polymer in the case of having an endothermic peak based on melting in a measurement of the polymer according to a DSC (differential scanning calorimeter). The crystalline polymer is a polymer which has a crystallizability such that the polymer is raised in temperature to be crystallizable, or which has been already crystallized.

In general, a polymer in which a large number of monomer units are bonded to each other is an amorphous polymer when the former polymer satisfies, for example, the following various conditions: the polymer is low in stereoregularity, and is bad in symmetry; has large side chains and many braches; and molecules of the polymer are small in intermolecular cohesive force. However, in accordance with the state of the presence thereof, the amorphous polymer may sufficiently advance in crystallization, so that the polymer may turn to a crystalline polymer. For example, even a polymer having large side chains may sufficiently advance in crystallization to become crystalline when the polymer is composed of single-species monomer units. Thus, even when polymers have the same monomer units, some of the polymers may become crystalline and the other may become amorphous. For this reason, the wording "may turn to an amorphous component" is used in the present invention.

Herein, the monomer units in the present invention are each a recurring unit included in the polymer and derived from one polyhydric alcohol and one polycarboxylic acid.

When monomer units each composed of terephthalic acid and ethylene glycol (ethylene terephthalate units) are monomer units contained mainly in a polymer, examples of a unit derived from the above-mentioned monomer that may turn to an amorphous component include a monomer unit composed of isophthalic acid and ethylene glycol, a monomer unit composed of terephthalic acid and neopentyl glycol, a monomer unit composed of terephthalic acid and 1,4-cyclohexanedimethanol, and a monomer unit composed of isophthalic acid and butanediol.

It is preferred not to incorporate, into the polyester, a diol having 8 or more carbon atoms (for example, octanediol), or a trihydric or higher polyhydric alcohol (for example, trimethylolpropane, trimethylolethane, glycerin, or diglycerin). A heat-shrinkable polyester-based label yielded by using the polyester containing the diol or polyhydric alcohol does not easily attain a required high shrinkage ratio. Moreover, it is preferred not to incorporate thereinto diethylene glycol, triethylene glycol or polyethylene glycol as much as possible.

In the polyester, it is preferred to copolymerize the amorphous component in 100% by mole of the polyhydric alcohol component and 100% by mole of the polycarboxylic acid component (that is, in 200% by mole of the total thereof) in the entire polyester resin. The copolymerization removes a fear of raw-material segregation so that physical properties of the film can be prevented from being changed by a variation of the film in raw-material composition. Furthermore, the copolymerization advances interesterification to increase the proportion of the amorphous quantity to give an advantage for heightening the shrinkage ratio of the film in the mainly shrunken direction.

As required, various additives may be added to the resin which forms the heat-shrinkable polyester-based film used in the label of the present invention, examples of the additives including waxes, an antioxidant, an antistatic agent, a crystal nucleating agent, a viscosity reducing agent, a heat stabilizer, a pigment for coloring, a coloring preventive, and an ultraviolet absorbent.

Also in the point that the tubing step can be attained at a high speed, it is preferred to add fine particles as a lubricant for making the film good in workability (lubricity) to the resin forming the heat-shrinkable polyester-based film. For the fine particles, any species is selectable. Examples of the fine particles of an inorganic type include silica, alumina, titanium dioxide, calcium carbonate, kaolin, and barium sulfate. Examples of the fine particles of an organic type include acrylic resin particles, melamine resin particles, silicone resin particles, and crosslinked polystyrene particles. The average particle diameter of the fine particles is from 0.05 to 3.0 µm (when measured by a Coulter counter), and is appropriately selectable, as required.

In a method for blending the particles into the resin which forms the heat-shrinkable polyester-based film, for example, the addition of the particles may be attained at any stage of producing the polyester. It is preferred to add the particles in the form of a slurry in which the particles are dispersed in, for example, ethylene glycol at the stage of the esterification, or at a stage after the end of the interesterification reaction and before the start of the polycondensation reaction, so as to advance the polycondensation reaction. The blending is also preferably attained by, for example, a method of using a vent-attached kneading extruder to blend a slurry in which the particles are dispersed in, for example, ethylene glycol or water with the raw materials of the polyester; or a method of using a kneading extruder to blend the particles which have been dried with the raw materials of the polyester.

The heat-shrinkable polyester-based film may be subjected to, for example, corona treatment, coating treatment or flame treatment to make the surface of the film good in printability or bondability.

The heat-shrinkable polyester-based film in the present invention includes, in the category thereof, a laminated type of polyester film having at least one polyester resin layer. When two or more polyester resin layers are laminated in the film, the respective polyesters of the polyester resin layers may be the same or different. A layer that may be laminated therein as a different layer is not particularly limited as far as the layer is a thermoplastic resin layer. A polystyrene-based resin layer is preferred from the viewpoint of costs and thermal shrinkage properties.

It is preferred to add, to the polystyrene-based resin, a thermoplastic resin and/or a rubber component. Examples of the thermoplastic resin include polystyrene having an atactic structure, AS resin, ABS resin, and other styrene resins; polyethylene terephthalate, polyethylene naphthalate, polybutylene terephthalate, and other polyester resins; nylon 6, nylon 66, nylon 12, nylon 4, polyhexamethylene adipamide, and other polyamide resins; polyethylene, polypropylene, polybutene, and other polyolefin resins.

The rubber component is preferably a rubbery copolymer containing, as a constituting component thereof, a styrene compound. Examples thereof include random, block, and graft copolymers each yielded by selecting one or more from styrenes and one or more from rubber components, and the copolymerizing the selected components. Examples of the rubbery copolymers include styrene-butadiene copolymer rubber, styrene-isoprene block copolymer, a rubber obtained by hydrogenating their butadiene moieties partially or wholly, methyl acrylate-butadiene-styrene copolymer rubber, acrylonitrile-butadiene-styrene copolymer rubber, acrylonitrile-alkyl acrylate-butadiene-styrene copolymer rubber, and methyl methacrylate-alkyl acrylate-butadiene-styrene copolymer rubber. The above-mentioned rubbery copolymers, which each contain, as a constituting component thereof, a styrene compound, are good in dispersibility in polystyrene-based resins having a syndiotactic structure and produce a large effect of improving the polystyrene-based resins in plasticity since the rubbery copolymers have styrene units. A compatibility adjustor may be preferably a rubbery copolymer containing, as a constituting component thereof, a styrene compound.

Usable other examples of the rubber component include natural rubber, polybutadiene, polyisoprene, polyisobutylene, neoprene, ethylene-propylene copolymer rubber, urethane rubber, silicone rubber, acrylic rubber, polyether-ester rubber, and polyester-ester rubber.

The weight average molecular weight of the polystyrene-based resin is preferably 10,000 or more, more preferably 50,000 or more. If the weight average molecular weight is less than 10,000, the resin is not preferred since the resultant film is unfavorably lowered easily in strength, elongation properties and heat resistance. The upper limit of the weight average molecular weight is not particularly limited. However, if the weight average molecular weight exceeds 1,500,000, the film may unfavorably undergo, for example, breaking following an increase of the film in orientation tension.

About the polystyrene-based resin, resins having various grades are commercially available from various makers. The resin may be a commercially available product. The above-mentioned different layer may have a monolayered structure or a bi- or higher multi-layered structure.

The heat-shrinkable polyester-based film in the present invention can be yielded by melt-extruding the above-mentioned raw materials for the polyester through an extruder to form an undrawn film, and then subjecting the undrawn film to transverse uniaxial drawing or transverse and longitudinal biaxial drawing, and to thermal treatment in a predetermined manner described below. When polyester layers are laminated onto each other, it is advisable to use plural extruders or feed blocks, or a multi-manifold. The polyester can be yielded by polycondensing one of the above-mentioned preferred dicarboxylic acid components and one of the above-mentioned preferred diol components in a known manner. Usually, two or more polyester species in a chip form are mixed with each other, and the mixture is used as a crude material of the film. When polyester layers are laminated onto each other, it is advisable to use plural extruders.

When the raw material resin is melt-extruded, it is preferred to use a drying device, such as a hopper drier or a paddle drier, or a vacuum drier to dry the raw materials of the polyester. After the raw materials of the polyester are dried in this way, an extruder is used to melt the raw materials at a temperature of 200 to 300°C to be extruded into a film form. At the time of the extruding, any already-existing method, such as a T-die method or a tubular method, may be adopted.

By cooling the sheet-form extruded and melted resin rapidly, an undrawn film can be obtained. The method for cooling the melted resin rapidly is preferably a method of casting the melted resin through a mouthpiece of the extruder onto a rotary drum, and cooling the resin rapidly and solidifying the resin to yield a substantially non-oriented resin sheet.

The resultant undrawn film is optionally heated to a temperature of 70 to 100°C, preferably 80 to 90°C between rolls, and then the film is longitudinally drawn at a draw ratio of 1.1 to 1.8, using a difference in speed between the rolls. The resultant longitudinally drawn film is optimally pre-heated to a temperature of 80 to 120°C, preferably 90 to 110°C, and then drawn in the transverse direction (direction orthogonal to the film-extruded direction) at a draw ratio of 3.0 or more, preferably 3.5 or more, and 7 or less, using, for example, a tenter. The drawing temperature is from 65 to 100°C both inclusive, preferably from 70 to 95°C both inclusive.

After the transverse drawing, it is preferred to treat the film thermally at a temperature higher than the drawing temperature by 1 to 30°C. This thermal treatment is conducted to relieve a strain state of the drawn film. The thermal treatment has advantageous effects also for the following: at the temperature for the thermal treatment, the thermal shrinkage ratio of the film is adjusted; and further a natural shrinkage ratio of the film is reduced. In the manner described hereinbefore, the heat-shrinkable polyester-based film in the present invention can be obtained.

The heat-shrinkable polyester-based film in the present invention can be made into a label by a method known in the prior art. For example, the heat-shrinkable polyester-based film is cut into a predetermined width; printing is appropriately applied to the resultant film; the above-defined solvent composition is used to put and bond right-and left end portions of the film onto each other to produce a tubular film; and this tubular film is cut into an appropriate length to produce a tubular label.

As required, a publicly-known method is used to perforate the label. Thereafter, the label covers a PET bottle, and the PET bottle is put on, for example, a belt conveyer and passed into and through a shrinking tunnel of a steam-blowing type (steam tunnel), or a shrinking tunnel of a hot-wind-blowing type (hot wind tunnel). At the time of the passage of the label through the tunnel, the label is thermally shrunken. In this way, the label is fitted to the PET bottle, or some other bottle container.

The package of the present invention is preferably yielded from the heat-shrinkable polyester-based film in the present invention. The package is preferably formed by covering at least a part of an outer circumference of a packaging object with the label that has perforations or notches, and shrinking the resultant thermally. Examples of the packaging object include PET bottles for drink, various bottles and cans, plastic containers for confectionery and lunch food, and paper boxes. In general, when a label yielded from a film heat-shrinkable polyester-based film is thermally shrunken and such a packaging object is covered with the shrunken label, the label is thermally shrunken by about 5 to 70% to be caused to adhere closely to the packaging object. Printing may or may not be applied to the label for covering the packaging object.

### EXAMPLES

Hereinafter, the present invention will be described in more detail by way of working examples thereof. However, the working examples do not limit the invention. When any one of the working examples is varied and carried out, the resultant variation is included in the present invention as far as the variation does not depart from the subject matters of the present invention. Methods for measuring physical properties of any film yielded in each of the working examples and comparative examples are as follows:

### [Density]

In accordance with JIS K7112, a film was immersed in a density gradient solution (calcium nitrate solution in water), and the density thereof was gained.

### [Hot-Water Thermal Shrinkage ratio]

A film was cut, along the longitudinal direction thereof and a direction (width direction) orthogonal thereto, into a square of 10 cm × 10 cm size, and the cut film was immersed in hot water of 90°C ± 0.5°C temperature under a non-load state for 10 seconds to be thermally shrunken. Immediately after the thermal shrinkage, the film was immersed in water of 25°C ± 0.5°C temperature for 10 seconds, and then pulled it up from the water. The length in the longitudinal direction of the film, and that in the transverse direction thereof were measured. The thermal shrinkage ratio of the film was a value obtained in accordance with the following expression: Shrinkage ratio = {("length before the shrinkage" - "length after the shrinkage")/"length before the shrinkage"} × 100(%)

In each of the present working examples, the direction of the film which showed the largest shrinkage ratio (mainly shrunken direction) was the width direction of the film.

### [Glass Transition Point (Tg)]

A differential scanning calorimeter (model: DSC 220) manufactured by Seiko Instruments Inc. was used to gain the glass transition point of a film in accordance with JIS K7121. The temperature of the film, which was an undrawn film having a weight of 10 mg, was raised from 25°C to 120°C at a temperature-raising rate of 10°C/minute to yield a temperature-raise profile of the film. The following was defined as the glass transition temperature: a temperature of the intersection of a line extended from a base line of the profile at the glass transition temperature or lower and a tangential line showing a maximum inclination in a transition range in the profile.

### [Solvent-Bonding Method]

While a film was cut into a width of 380 mm, the winding length of the film in the longitudinal direction was set to 1000 m. In this way, a film roll was produced. The film was unwound from the film roll, and then a solvent composition for bonding was applied, along the longitudinal direction of the film and continuously, to the inside of the film at one single end portion in the width direction of the film, so as to give a composition-applied width in the range of 4 ± 2 mm. The film was folded to put this solvent-composition-applied portion onto the other end portion in the width direction of the film to locate the resultant overlap portion at the center of the film. In this way, the end portions were bonded to each other with the solvent.

The solvent-bonding working speed was set to 400 m/minute. At the same speed, the film after the solvent-bonding was wound onto a paper pipe. The resultant tubular label roll was aged in an atmosphere of 23°C temperature for 24 hours. Moreover, the solvent-applied amount was adjusted at will.

### [Viscosity of Solvent Composition]

A B-type viscometer (model: BASE L) manufactured by Atago Co., Ltd. was used to measure the viscosity of a solvent composition at a solvent composition temperature of 23°C and a rotary number of 10 rpm.

### [Evaluation of Solvent Permeation-Through Property]

The tubular label, which had been obtained by the solvent-bonding and aged and which had a winding length of 1000 m, was pulled out, by 500 m, from the outer surface of the roll by hand. When a blocking phenomenon was caused, it was judged that the solvent permeated through. On the basis of the judgement, the label was evaluated as follows:
No blocking is caused: the solvent permeation-through property evaluation is good (circular mark) (no permeation-through).
Blocking is caused: the solvent permeation-through property evaluation is bad (cross mark) (permeation-through).

### [Method for Measuring Peel Strength of Solvent-Bonded Portion]

From a portion of the outer surface of the tubular label roll having a winding length of 500 m, which had been pulled out, by 500 m, from the outer surface of the roll at the time of evaluating the solvent permeation-through, samples each having a width of 15 mm (corresponding to the length in the longitudinal direction) were cut out (the length was sufficient to be a length of about 100 mm) along the circumferential direction to position the solvent-bonded portion at the center of the label. The number of the samples n was 10. Each of the samples was set to a universal tensile tester "STM-50" manufactured by a company Baldwin to make a 180°-peel test at a tensile speed of 200 mm/minute. The average of values of the ten samples was defined as the peel strength (N/15mm) of the solvent-bonded portion.

### <Synthesis Examples of Polyester A to G, and I to J>

Into an autoclave made of stainless steel and equipped with a stirrer, a thermometer and a partially-refluxing-type condenser were charged 100% by mole of dimethyl terephthalate (DMT) as a dicarboxylic acid component and 100% by mole of ethylene glycol (EG) as a polyhydric alcohol component to adjust the ratio by mole of ethylene glycol to dimethyl terephthalate to 2.2, and then zinc acetate was used as an interesterification catalyst in a proportion of 0.05% by mole (of the acid component) to conduct an interesterification reaction while produced methanol was distilled off to the outside of the system. Thereafter, thereto was added antimony trioxide as a polycondensing catalyst in a proportion of 0.225% by mole (of the acid component) to conduct a polycondensation reaction at 280°C under a reduced pressure of 26.7 Pa to yield a polyester A having an intrinsic viscosity of 0.70 dL/g. This polyester A was polyethylene terephthalate. In the production of the polyester A, as a lubricant, SiO₂ (SILYSIA 266, manufactured by Fuji Silysia Chemical Ltd.) was added to the other components in a proportion of 8000 ppm of the polyester. The same way as described above was used to synthesize each of polyesters B, C, D, I and J shown in Table 1, and polyesters E, Σ and G shown in Table 2. As a PET-bottle-recycled material, a product "CLEAR PELLET" (manufactured by a company Yono PET Bottle Recycle; intrinsic viscosity: 0.63 dL/g) was used in the form of chips H.

In each of the tables, TPA shows terephthalic acid; IPA, isophthalic acid; OPA, orthophthalic acid; AA, acrylic acid; SA, sebacic acid; CHDM, 1,4-cyclohexanedimethanol; NPG, neopentyl glycol; and BD, 1,4-buzanediol. About the intrinsic viscosities of the polyesters in Tables 1 and 2, the polyesters A, B, C, D, E, F, G, H, I and J had the following viscosities, respectively: 0.70 dL/g, 0.70 dL/g, 0.73 dL/g, 0.73 dL/g, 0.53 dL/g, 0.98 dL/g, 0.89 dL/g, 0.63 dL/g, 0.70 dL/g, and 0.70 dL/g. Each of the polyesters was appropriately made into a chip form.

**[Table 1]**

| | Raw material composition (% by mole) of polyester | | | | | | Active agent added amount (ppm) | Glass Transition temperature (°C) | Intrinsic viscosity (dL/g) |
|---|---|---|---|---|---|---|---|---|---|
| | Dicarboxylic acid component(s) | | Glycol component(s) | | | | | | |
| | TPA | IPA | EG | CHDM | NPG | DEG | | | |
| Polyester A | 100 | - | 100 | - | - | - | 8000 | 75 | 0.70 |
| Polyester B | 100 | - | 100 | - | - | - | 0 | 75 | 0.70 |
| Polyester C | 100 | - | 70 | 30 | - | - | 0 | 75 | 0.73 |
| Polyester D | 100 | - | 70 | - | 30 | - | 0 | 75 | 0.73 |
| Polyester H | 98 | 2 | 100 | - | - | - | 0 | 75 | 0.63 |
| Polyester I | 100 | - | 67 | - | 23 | 10 | 0 | 65 | 0.70 |
| Polyester J | 100 | - | 60 | 35 | - | 5 | 0 | 72 | 0.70 |
| | Particulars of raw material chips | | | | | | | | |
| | Polymer species | | | | Product name, maker | | | | |
| Chips K | Styrene-butyl acrylate copolymer | | | | SC004, PS Japan Corp. | | | | |
| Chips L | Polystyrene | | | | HH203, PS Japan Corp. | | | | |
| Chips M | Styrene-butadiene block copolymer | | | | CLEAREN 530L, Denka Co., Ltd. | | | | |
| Chips N | Styrene-butadiene block copolymer | | | | TUFPRENE 126, Asahi Chemical & Industrial Co., Ltd. | | | | |

**[Table 2]**

| | Raw material composition (% by mole) of polyester | | | | | | | | Intrinsic viscosity | Glass transition temperature |
|---|---|---|---|---|---|---|---|---|---|---|
| | Dicarboxylic acid component(s) | | | | Glycol component(s) | | | | | |
| | TPA | IPA | AA | SA | EG | CHDM | NPG | BD | (dL/g) | (°C) |
| Polyester E | 50 | 50 | - | - | 50 | - | 50 | - | 0.53 | 67 |
| Polyester F | 60 | 10 | - | 30 | 57 | - | 43 | - | 0.98 | 10 |
| Polyester G | 60 | 5 | 35 | - | 22 | 44 | - | 34 | 0.89 | -20 |

### <Method for Producing Film I>

The respective polyester chip species yielded in the synthesis examples were pre-dried separately from each other. As shown in Table 3, 5% by mass of the polyester A, 5% by mass of the polyester B, and 90% by mass of the polyester C were mixed with each other, and the mixed resin was put into an extruder. This mixed resin was melted at 280°C, and extruded out through its T die. The mixed resin was brought into contact with a rotary metallic roll having a surface temperature cooled to 30°C to be rapidly cooled to yield an undrawn film having a thickness of 60 µm. The amorphous component amount in the film is shown in Table 3. The winding-up speed of the undrawn film (the rotation speed of the metallic roll) at this time was about 20 m/min.

The undrawn film was introduced to a tenter. The film was heated to 100°C in a pre-heating zone, and drawn 5 times into the width direction thereof in a drawing zone set to a temperature of 78°C. Subsequently, the film was thermally treated at 82°C for 5 seconds, and then cooled. Both end portions of the film were cut and removed, and the resultant was wound into the form of a roll having a width of 500 mm to produce a transversely and uniaxially drawn film having a thickness of 12 µm continuously over 1100 m. The resultant film was a heat-shrinkable polyester-based film that was thermally shrinkable only into the width direction. The hot-water thermal shrinkage ratio measured at 90°C is shown in Table 3.

### <Method for Producing Film II>

A transversely and uniaxially drawn film having a thickness of 40 µm was continuously produced over 1100 m in the same way as used to produce the film I except that instead of the polyester C, the polyester D was used, and the thickness of the undrawn film was changed from 60 µm to 200 µm. The resultant film was a heat-shrinkable polyester-based film that was thermally shrinkable only into the width direction. The hot-water thermal shrinkage ratio measured at 90°C is shown in Table 3.

### <Method for Producing Film III>

A transversely and uniaxially drawn film having a thickness of 16 µm was continuously produced over 1100 m in the same way as used to produce the film I except that: the polyesters A, C and H were used, respectively, in proportions of 5% by mass, 25% by mass, and 70% by mass; the thickness of the undrawn film was changed from 60 µm to 64 µm; and the draw ratio was changed from 5 to 4. The resultant film was a heat-shrinkable polyester-based film that was thermally shrinkable only into the width direction. The hot-water thermal shrinkage ratio measured at 90°C is shown in Table 3.

### <Method for Producing Film IV>

The respective polyester chip species yielded in the synthesis examples were pre-dried separately from each other. As shown in Table 3, 5% by mass of the polyester A, and 95% by mass of the polyester I were mixed with each other, and the mixed resin was put into an extruder. This mixed resin was melted at 280°C, and extruded out through its T die. The mixed resin was brought into contact with a rotary metallic roll having a surface temperature cooled to 30°C to be rapidly cooled to yield an undrawn film having a thickness of 100 µm. The amorphous component amount in the film is shown in Table 3. The winding-up speed of the undrawn film (the rotation speed of the metallic roll) at this time was about 20 m/min.

The undrawn film was introduced to a tenter. The film was heated to 90°C in a pre-heating zone, and drawn 5 times into the width direction thereof in a drawing zone set to a temperature of 70°C. Subsequently, the film was thermally treated at 78°C for 5 seconds, and then cooled. Both end portions of the film were cut and removed, and the resultant was wound into the form of a roll having a width of 500 mm to produce a transversely and uniaxially drawn film having a thickness of 20 µm continuously over 1100 m. The resultant film was a heat-shrinkable polyester-based film that was thermally shrinkable only into the width direction. The hot-water thermal shrinkage ratio measured at 90°C is shown in Table 3.

### <Method for Producing Film V>

The polyester I was changed to the polyester J to yield an undrawn film having a thickness of 100 µm. The undrawn film was introduced to a tenter. The film was heated to 97°C in a pre-heating zone, and drawn 5 times into the width direction thereof in a drawing zone set to a temperature of 77°C. Subsequently, the film was thermally treated at 85°C for 5 seconds, and then cooled. Both end portions of the film were cut and removed, and the resultant was wound into the form of a roll having a width of 500 mm to produce a transversely and uniaxially drawn film having a thickness of 20 µm continuously over 1100 m. The resultant film was a heat-shrinkable polyester-based film that was thermally shrinkable only into the width direction. The hot-water thermal shrinkage ratio measured at 90°C is shown in Table 3.

### <Method for Producing Film VI>

The polyesters A, I and H were used, respectively, in proportions of 5% by mass, 70% by mass and 25% by mass to yield an undrawn film having a thickness of 100 µm. The undrawn film was introduced to a tenter. The film was heated to 93°C in a pre-heating zone, and drawn 5 times into the width direction thereof in a drawing zone set to a temperature of 73°C. Subsequently, the film was thermally treated at 81°C for 5 seconds, and then cooled. Both end portions of the film were cut and removed, and the resultant was wound into the form of a roll having a width of 500 mm to produce a transversely and uniaxially drawn film having a thickness of 20 µm continuously over 1100 m. The resultant film was a heat-shrinkable polyester-based film that was thermally shrinkable only into the width direction. The hot-water thermal shrinkage ratio measured at 90°C is shown in Table 3.

### <Method for Producing Film VII>

A co-extruding method was used to melt-extrude a core-layer-forming resin, a skin-layer-forming resin, and an adhesive-layer-forming resin from different extruders (first to third extruders), and these resins were laminated onto each other in a dice (T die). An air knife method was used to wind the laminate onto a rotary metallic roll cooled to 30°C, and cool the laminate rapidly to yield an undrawn film (polystyrene-based resin laminated sheet) having a thickness of 100 µm and having a three-species and five-layer structure, that is, a structure having a core layer, respective intermediate layers (adhesive layers) on both of front and rear sides of the core layer, and respective skins layers on outer sides of the intermediate layers. Methods for the formation of the individual layers of the undrawn film (steps in and before the melt-extruding of the layers) are as described below. Hereinafter, the layers of the polystyrene-based mixed resin laminated sheet will be referred to, in an order from the front side to the rear side, as first, second, third, fourth, and fifth layers (that is, the outer surface of the fifth layer was a metallic roll-contacting surface). The winding-up speed of the undrawn film (the rotation speed of the metallic roll) at this time was about 20 m/min.

### -Formation of First and Fifth Layers (Skin Layers)

A blender apparatus was used to pre-dry each of the polyesters A and I, and then the blender was used to mix 5 parts by mass of the pre-dried polyester A with 95 parts by mass of the pre-dried polyester I. Thereafter, a constant-supply screw feeder was used to supply the mixture continuously to a hopper just above a first extruder. From a T die of the first extruder, which was a uniaxial type, the supplied mixture of the polyesters A and I was melt-extruded at 280°C (the melt-extrusion was attained to laminate two layers onto respective outsides of the intermediate layers onto respective outsides of the front and rear surfaces of the core layer). In order to stabilize the extrusion from the T die, a gear pump of a helical and parallel type was interposed between the extruder and the T die.

### ·Formation of Second and Fourth Layers (Adhesive Layers)

A blender apparatus was used to pre-dry chips K, and then a constant-supply screw feeder was used to supply the pre-dried chips K continuously to a hopper just above a second extruder. From a T die of the second extruder, which was a uniaxial type, the supplied chips K were melt-extruded (the melt-extrusion was attained to laminate two layers onto the respective outsides of the front and rear surfaces of the core layer). The temperature of the second extruder was adjusted to 200°C. In order to stabilize the extrusion from the T die in the same manner as in the extrusion through the first extruder, a gear pump of a helical and parallel type was interposed between the extruder and the T die.

### ·Formation of Third Layer (Core Layer)

A blender apparatus was used to pre-dry each of the species of chips L, M and N, and then the species of the chips L, M, and N were separately from each other and continuously supplied into a blending mixer, using a constant-supply screw feeder. The supplied amount of the chips L, that of the chips M, and that of the chips N were set, respectively, to 43, 43 and 14% parts by mass. Thereafter, a constant-supply screw feeder was used to supply a mixed material of the chips L, M and N mixed in the blending mixer continuously and separately to a hopper just above a third extruder. From a T die of the third extruder, which was a uniaxial type, the supplied chips L, M and N (mixed with each other) were melt-extruded. The temperature of the third extruder was also adjusted to 200°C. In order to stabilize the extrusion from the T die in the same manner as in the extrusions through the first and second extruders, a gear pump of a helical and parallel type was interposed between the extruder and the T die.

In the resin extrusions through the individual extruders, the extruded-out quantities from the first to the third extruders in the formation of the undrawn film were adjusted to set the thickness ratio between the first/second/third/fourth/fifth layers into a ratio of 24/2/48/2/24.

The resultant undrawn film was heated to 100°C in a pre-heating zone, and drawn 5 times into the width direction thereof in a drawing zone set to a temperature of 80°C. Subsequently, the film was thermally treated at 88°C for 5 seconds, and then cooled. Both end portions of the film were cut and removed, and the resultant was wound into the form of a roll having a width of 500 mm to produce a uniaxially and transversely drawn film having a thickness of 20 µm continuously over 1100 m. The resultant film was a heat-shrinkable polyester-based film that was thermally shrinkable only into the width direction. The hot-water thermal shrinkage ratio measured at 90°C is shown in Table 3.

**[Table 3]**

| | Layer structure | Resin composition | | | | | | | Amorphous | Glass | Transverse drawing step | | | | Thickness | Film Density | Hot water thermal shrinkage ratio | |
|---|---|---|---|---|---|---|---|---|---|---|---|---|---|---|---|---|---|---|
| | | (% by mass) | | | | | | | component proportion | transition temperature of raw material | Preheating | Drawing | Draw ratio | Final thermal | | | (%) | |
| | | | | | | | | | | | temperature | temperature | | Treatment temperature | | | at a measurement temperature of 90°C | |
| | | A | B | C | D | H | I | J | (% by mole) | (°C) | (°C) | (°C) | | (°C) | (µm) | | Longitudinal direction | Width direction |
| Film I | Monolayer | 5 | 5 | 90 | - | - | | | 27 | 75 | 100 | 78 | 5 | 82 | 12 | 1.32 | -2 | 74 |
| Film II | Monolayer | 5 | 5 | - | 90 | - | | | 27 | 75 | 100 | 78 | 5 | 82 | 40 | 1.32 | 0 | 72 |
| Film III | Monolayer | 5 | - | 25 | - | 70 | | | 7.5 | 75 | 100 | 78 | 4 | 82 | 16 | 1.37 | 8 | 45 |
| Film IV | Monolayer | 5 | | | | | 95 | | 21.85 | 65 | 90 | 70 | 5 | 78 | 20 | | -2 | 70 |
| Film V | Monolayer | 5 | | | | | | 95 | 33.25 | 72 | 97 | 77 | 5 | 85 | 20 | | -4 | 72 |
| Film VI | Monolayer | 5 | | | | | 70 | 25 | 16.6 | 68 | 93 | 73 | 5 | 81 | 20 | | 0 | 68 |
| Film VII | Three-species and five-layer | /B:K:L/M/N:K:A/ B=5/95:100:43/43/ 14:100:5/95 | | | | | | | 10.5 | 75 | 100 | 80 | 5 | 88 | 20 | | -2 | 68 |

### [Example 1]

A solvent composition in which 1,3-dioxolane, acetone and the polyester E were mixed with each other at a ratio (by mass) of 22/68/10 was applied into a width of 4 mm and a quantity of 300 mg/m² onto the film I to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 4. The label caused no solvent permeation-through, and had a large peel strength of the solvent-bonded portion to be a good label.

### [Example 2]

Evaluations were made in the same way as in Example 1 except that a solvent composition in which 1,3-dioxolane, acetone and the polyester E were mixed with each other at a ratio (by mass) of 45/45/10 was applied into a quantity of 100 mg/m². Conditions for the solvent bonding and are shown in Table 4. The label caused no solvent permeation-through, and had a large peel strength of the solvent-bonded portion to be a good label.

### [Examples 3 to 8]

The film, and the blend ratio in the solvent composition were variously changed to make evaluations in the same way as in Example 1. Conditions for the solvent bonding in each of these working examples, and are shown in Table 4. The labels each caused no solvent permeation-through, and had a large peel strength of the solvent-bonded portion to be each a good label.

### [Comparative Example 1]

A tubular label roll was yielded in the same way as in Example 1 except that a solvent made only of 1,3-dioxolane was used. Conditions for the solvent bonding, and the results are shown in Table 4. The label caused solvent permeation-through not to be a preferable label.

### [Comparative Example 2]

A tubular label roll was yielded in the same way as in Example 1 except the use of a solvent composition in which 1,3-dioxolane and acetone were mixed with each other at a ratio (by mass) of 50/50. Conditions for the solvent bonding, and the results are shown in Table 4. The label caused no solvent permeation-through, but had a small peel strength of the solvent-bonded portion not to be a preferable label.

### [Comparative Example 3]

A tubular label roll was yielded in the same way as in Example 1 except that a solvent made only of 1,3-dioxolane was used for the film III. Conditions for the solvent bonding, and the results are shown in Table 4. The label caused no solvent permeation-through, but had a small peel strength of the solvent-bonded portion not to be a preferable label.

### [Comparative Example 4]

An attempt was made to yield a tubular label roll in the same way as in Example 1 except the use of a solvent composition in which 1,3-dioxolane and the polyester F were mixed with each other at a ratio (by mass) of 70/30. Conditions for the solvent bonding, and the results are shown in Table 4. The viscosity of the solvent composition was too high to apply the solvent composition onto the film to give a width of 4 mm and a quantity of 50 mg/m² or more.

**[Table 4]**

| | Used Film | Polyester in bonding solvent composition | Composition (% by mass) of solvent composition | | | | Applied amount of solvent composition (mg/m²) | Solvent-bonding working speed (m/min.) | Viscosity of Solvent composition (mPa·s) | Solvent permeation-through (blocking) | Peel strength of solvent-bonded portion (N/15mm) |
|---|---|---|---|---|---|---|---|---|---|---|---|
| | | | 1,3-Dioxolane | Acetone | THF | Polyester | | | | | |
| Example 1 | Film I | Polyester E | 22 | 68 | - | 10 | 300 | 400 | 8 | ○ | 4.2 |
| Example 2 | Film I | Polyester E | 45 | 45 | - | 10 | 100 | 400 | 8 | ○ | 2.5 |
| Example 3 | Film II | Polyester E | 49 | 49 | - | 2 | 300 | 400 | 7 | ○ | 2.8 |
| Example 4 | Film II | Polyester E | 90 | 0 | - | 10 | 300 | 400 | 8 | ○ | 6.3 |
| Example 5 | Film III | Polyester E | 90 | 0 | - | 10 | 300 | 400 | 8 | ○ | 3.4 |
| Example 6 | Film III | Polyester F | 90 | 0 | - | 10 | 300 | 400 | 8 | ○ | 5.2 |
| Example 7 | Film III | Polyester F | 80 | 0 | - | 20 | 300 | 400 | 54 | ○ | 5.8 |
| Example 8 | Film III | Polyester G | 95 | 0 | - | 5 | 300 | 400 | 7 | ○ | 2.9 |
| Comparative Example 1 | Film I | None | 100 | 0 | - | 0 | 300 | 400 | 6 | × | 3.9 |
| Comparative Example 2 | Film I | None | 50 | 50 | - | 0 | 300 | 400 | 5 | ○ | Less than 1 |
| Comparative Example 3 | Film III | None | 100 | 0 | - | 0 | 300 | 400 | 6 | ○ | Less than 1 |
| Comparative Example 4 | Film I | Polyester F | 70 | 0 | - | 30 | - | Unable to apply solvent | 100 or more | - | - |

### [Example 9]

A solvent composition in which THF and the polyester E were mixed with each other at a ratio (by mass) of 90/10 was applied into a width of 4 mm and a quantity of 250 mg/m² onto the film IV to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 10]

A solvent composition in which THF and the polyester F were mixed with each other at a ratio (by mass) of 80/20 was applied into a width of 4 mm and a quantity of 250 mg/m² onto the film IV to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 11]

A solvent composition in which THF and the polyester G were mixed with each other at a ratio (by mass) of 95/5 was applied into a width of 4 mm and a quantity of 250 mg/m² onto the film IV to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 12]

A solvent composition in which THF and the polyester E were mixed with each other at a ratio (by mass) of 60/40 was applied into a width of 4 mm and a quantity of 100 mg/m² onto the film IV to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 13]

A solvent composition in which THF and the polyester E were mixed with each other at a ratio (by mass) of 90/10 was applied into a width of 4 mm and a quantity of 250 mg/m² onto the film V to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 14]

A solvent composition in which THF and the polyester F were mixed with each other at a ratio (by mass) of 80/20 was applied into a width of 4 mm and a quantity of 250 mg/m² onto the film VI to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 15]

A solvent composition in which THF and the polyester E were mixed with each other at a ratio (by mass) of 60/40 was applied into a width of 4 mm and a quantity of 100 mg/m² onto the film VI to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Example 16]

A solvent composition in which THF and the polyester E were mixed with each other at a ratio (by mass) of 90/10 was applied into a width of 4 mm and a quantity of 250 mg/m² onto the film VII to bond end portions thereof onto each other with the solvent at a working speed of 400 m/minute to yield a tubular label roll. By the above-mentioned methods, measurements were made about whether or not solvent permeation-through was caused, and about the peel strength of the solvent-bonded portion. Conditions for the solvent bonding, and the results are shown in Table 5. The label caused no solvent permeation-through, and had a large peel strength of the solvent-bonded portion to be a good label.

### [Comparative Example 5]

A tubular label roll was yielded in the same way as in Example 12 except that a solvent made only of THF was used. Conditions for the solvent bonding, and the results are shown in Table 5. The label had a low peel strength of the solvent-bonded portion not to be a preferable label.

### [Comparative Example 6]

A tubular label roll was yielded in the same way as in Example 15 except that a solvent made only of THF was used. Conditions for the solvent bonding, and the results are shown in Table 5. The label had a low peel strength of the solvent-bonded portion not to be a preferable label.

### [Comparative Example 7]

An attempt was made to yield a tubular label roll in the same way as in Example 9 except that a solvent composition was used in which THF and the polyester G were mixed with each other at a ratio (by mass) of 40/60. Conditions for the solvent bonding, and the results are shown in Table 5. The viscosity of the solvent composition was too high to apply the solvent composition onto the film to give a width of 4 mm and a quantity of 1 g/m² or less.

**[Table 5]**

| | Used Film | Composition (% by mass) of bonding solvent | | | | Applied amount of bonding solvent composition (mg/m²) | Solvent-bonding working speed (m/min.) | Viscosity of Bonding solvent composition (mPa·s) | Solvent permeation-through (blocking) | Peel strength of solvent-bonded portion (N/15mm) |
|---|---|---|---|---|---|---|---|---|---|---|
| | | THF | Polyester E | Polyester F | Polyester G | | | | | |
| Example 9 | Film IV | 90 | 10 | - | - | 250 | 400 | 8 | ○ | 4.5 |
| Example 10 | Film IV | 80 | - | 20 | - | 250 | 400 | 9 | ○ | 5.0 |
| Example 11 | Film IV | 95 | - | - | 5 | 250 | 400 | 7 | ○ | 3.9 |
| Example 12 | Film IV | 60 | 40 | - | - | 100 | 400 | 45 | ○ | 3.3 |
| Example 13 | Film V | 90 | 10 | - | - | 250 | 400 | 8 | ○ | 4.5 |
| Example 14 | Film VI | 80 | - | 20 | - | 250 | 400 | 54 | ○ | 4.7 |
| Example 15 | Film VI | 60 | 40 | - | - | 100 | 400 | 45 | ○ | 3.1 |
| Example 16 | Film VII | 90 | 10 | - | - | 250 | 400 | 8 | ○ | 4.5 |
| Comparative Example 5 | Film IV | 100 | - | - | - | 100 | 400 | 6 | ○ | 1.5 |
| Comparative Example 6 | Film VI | 100 | - | - | - | 100 | 400 | 6 | ○ | Less than 1 |
| Comparative Example 7 | Film IV | 90 | - | - | 60 | - | Unable to apply solvent | 100 or more | - | - |

### INDUSTRIAL APPLICABILITY

The heat-shrinkable polyester-based label of the present invention can cope with requests of making the label thinner to reduce the quantity of wastes, and therein inconvenience, such as solvent permeation-through, are not easily caused. Moreover, the label is high in peel strength of its bonded portion to be useful as a label for a bottle for drink. Additionally, even in the case of using a heat-shrinkable polyester-based film making use of PET-bottle-recycled material high in crystallinity in a large proportion, the resultant label is high in peel strength of its solvent-bonded portion; thus, also from this viewpoint, the label is useful for a label for a bottle for drink.

## Claims

1. A heat-shrinkable polyester-based label, which is a tubular label in which both end portions of a heat-shrinkable polyester-based film are bonded to each other with a solvent composition, wherein: the solvent composition is a solvent composition containing at least 1,3-dioxolane and/or tetrahydrofuran (THF), and a polyester; and the end portion bonded has a peel strength of 2 N/15mm or more, which is determined in accordance with the description.

2. The heat-shrinkable polyester-based label according to claim 1, wherein a content of the polyester contained in the solvent composition is from 1 to 40% both inclusive by mass.

3. The heat-shrinkable polyester-based label according to claim 1 or 2, wherein the heat-shrinkable polyester-based film has a thickness of 5 to 60 µm both inclusive.

4. The heat-shrinkable polyester-based label according to any one of claims 1 to 3, comprising a laminated film having the heat-shrinkable polyester-based film as at least a surface layer of the laminated film.

5. A package, comprising the heat-shrinkable polyester-based label recited in any one of claims 1 to 4 on at least a part of an outer circumference of a packaging object.

6. A method for producing a heat-shrinkable polyester-based label, comprising: putting and bonding both end portions of a heat-shrinkable polyester-based film onto each other with a solvent composition containing at least 1,3-dioxolane and/or tetrahydrofuran (THF), and a polyester.

## Patentansprüche

1. Ein wärmeschrumpfbares Etikett auf Polyesterbasis, bei dem es sich um ein schlauchförmiges Etikett handelt, bei dem beide Endabschnitte eines wärmeschrumpfbaren Films auf Polyesterbasis mit einer Lösungsmittelzusammensetzung miteinander verbunden sind, wobei: die Lösungsmittelzusammensetzung eine Lösungsmittelzusammensetzung ist, die mindestens 1,3-Dioxolan und/oder Tetrahydrofuran (THF) und einen Polyester enthält; und der verbundene Endabschnitt eine Ablösefestigkeit von 2 N/15 mm oder mehr aufweist, die gemäß der Beschreibung bestimmt wird.

2. Das wärmeschrumpfbare Etikett auf Polyesterbasis nach Anspruch 1, wobei ein Gehalt des in der Lösungsmittelzusammensetzung enthaltenen Polyesters in beiden Fällen einschließlich 1 bis 40 Massen-% beträgt.

3. Das wärmeschrumpfbare Etikett auf Polyesterbasis nach Anspruch 1 oder 2, wobei der wärmeschrumpfbare Film auf Polyesterbasis eine Dicke von in beiden Fällen einschließlich 5 bis 60 µm aufweist.

4. Das wärmeschrumpfbare Etikett auf Polyesterbasis nach einem der Ansprüche 1 bis 3, umfassend einen laminierten Film mit dem wärmeschrumpfbaren Film auf Polyesterbasis als mindestens eine Oberflächenschicht des laminierten Films.

5. Eine Verpackung, umfassend das in einem der Ansprüche 1 bis 4 angegebene wärmeschrumpfbare Etikett auf Polyesterbasis auf mindestens einem Teil eines Außenumfangs eines Verpackungsgegenstands.

6. Ein Verfahren zur Herstellung eines wärmeschrumpfbaren Etiketts auf Polyesterbasis, umfassend: Aufeinanderlegen und miteinander Verbinden beider Endabschnitte eines wärmeschrumpfbaren Films auf Polyesterbasis mit einer Lösungsmittelzusammensetzung, die mindestens 1,3-Dioxolan und/oder Tetrahydrofuran (THF) und einen Polyester enthält.

## Revendications

1. Étiquette à base de polyester thermorétractable, qui est une étiquette tubulaire dans laquelle les deux portions terminales d'un film à base de polyester thermorétractable sont liées l'une à l'autre avec une composition de solvant, dans laquelle : la composition de solvant est une composition de solvant contenant au moins du 1,3-dioxolane et/ou du tétrahydrofurane (THF), et un polyester ; et la portion terminale liée a une résistance à l'arrachage de 2 N/15 mm ou plus, qui est déterminée conformément à la description.

2. Étiquette à base de polyester thermorétractable selon la revendication 1, dans laquelle une teneur en le polyester contenu dans la composition de solvant va de 1 à 40 %, respectivement inclus, en masse.

3. Étiquette à base de polyester thermorétractable selon la revendication 1 ou 2, dans laquelle le film à base de polyester thermorétractable a une épaisseur de 5 à 60 µm, respectivement inclus.

4. Étiquette à base de polyester thermorétractable selon l'une quelconque des revendications 1 à 3, comprenant un film stratifié ayant le film à base de polyester thermorétractable en tant qu'au moins une couche de surface du film stratifié.

5. Emballage, comprenant l'étiquette à base de polyester thermorétractable indiquée selon l'une quelconque des revendications 1 à 4 sur au moins une partie d'une circonférence externe d'un objet d'emballage.

6. Méthode de production d'une étiquette à base de polyester thermorétractable, comprenant : la mise en place et l'assemblage des deux portions terminales d'un film à base de polyester thermorétractable l'une sur l'autre avec une composition de solvant contenant au moins du 1,3-dioxolane et/ou du tétrahydrofurane (THF), et un polyester.
